# EUROPEAN PATENT APPLICATION

(11) **EP 3 578 293 A1**
(43) Date of publication of application: **11.12.2019**
(21) Application number: 18176755.9
(22) Date of filing: 08.06.2018
(51) Int. Cl.: B23Q 3/08, B32B 38/18, B65G 47/91, F16B 11/00, F16B 47/00, B29C 65/48, B29C 65/78, B32B 37/10, B25B 11/00

(54) **METHOD FOR ATTACHING AN ELEMENT TO A WORKPIECE USING AN APPLICATION TOOL AND APPLICATION TOOL FOR USE IN THE METHOD**

(71) Applicant: Nitto Belgium NV, 3600 Genk (BE)
(72) Inventor: Jans, Nicky, 3600 Genk (BE); Muffels, Peter, 3600 Genk (BE); Parloo, Eli, 3600 Genk (BE)
(74) Representative: Grünecker Patent- und Rechtsanwälte PartG mbB

(57) **Abstract**

The present invention refers to a method for attaching an element (13;13'') to a workpiece (14;14'') using an application tool (1;1';1'') and to an application tool (1;1';1'') for use in the method. It is the objective of the present invention to provide an alternative method and an alternative application tool (1;1';1'') which can also be used in difficult to reach areas of a workpiece (14;14''). The method comprises the following steps: holding the element (13;13'') with the application tool; placing the application tool (1;1';1'') with the element (13;13'') held therein onto the workpiece (14;14''); creating an attractive force between the application tool (1;1';1'') holding the element (13;13'') and the workpiece (14;14'') and thereby positioning the application tool (1;1';1'') holding the element (13;13'') on the workpiece(14;14''); and attaching the element (13;13'') to the workpiece(14;14''). The application tool (1;1';1'') comprises a mounting section (4;28) for holding an element (13;13'') to be attached to the workpiece(14;14''), the mounting section (4;28) comprising at least one circumferential compressible seal (7;7''), and a force application system for applying an attractive force between the application tool (1;1';1'') and the workpiece (14;14'').

## Description

The present invention refers to a method for attaching an element to a workpiece using an application tool and to an application tool for use in the method.

A typical example for such a method for attaching an element to a workpiece is the attachment of NVH materials (Noise Vibration Harshness) to body panels of cars. NVH materials are aimed at dampening or stiffening the body panels of cars and usually have at least one self-adhesive side for fixing the material to the body panel. A typical application is the attaching of NVH materials on outer body panels of car doors. In a method known from the state of the art, the attachment is carried out in the body-in-white (BIW) shop. In an example when a robot takes a patch of NVH material from a storage place, transfers the patch to the correct position on the body panel, places the patch in this position on the body panel and thereafter applies a pressure to the patch by wiping a tool over the patch.

As long as the area of the body panel where the patch is to be applied is easily accessible, this method achieves good results. However, the method reaches its limits when the patch should be applied to areas that are difficult to reach, for example later in the OEM process, i.e. after the paint process. The body panels are then already assembled. An example would be attaching a patch of an NVH material to the inner side of an outer panel of a car door.

It is therefore the object of the present invention to provide an alternative method for attaching elements to a workpiece and which can also be used on difficult to reach areas of a workpiece, for example in after-paint applications in the automotive sector where the car structure is already assembled and which allows the element to be attached to the workpiece in a reliable way.

In order to achieve this objective, the method comprises the following steps: holding the element with the application tool; placing the application tool with the element held therein onto the workpiece; creating an attractive force between the application tool holding the element and the workpiece and thereby positioning the application tool holding the element on the workpiece; and attaching the element to the workpiece.

In the context of the present patent application, the term "positioning of the application tool" means bringing in the application tool in the correct position and holding the application tool in this position. The attractive force between the application tool and the workpiece is therefore also a holding force holding the application tool at the workpiece. This holding force must be higher than the weight of the application tool and the weight of the element held in the application tool so that the application tool is fixed to the workpiece even in overhead applications. The method allows a secure hold of the element in the application tool and a secure positioning of the application tool on the workpiece. This leads to a high safety for the operator. The method allows a repeatable and reliable application of the element on the workpiece. The workpiece can be any part onto which an element should be attached. For example, the workpiece can be an assembled car door. However, the method is not limited to such a use and can also be used for other workpieces, for example a panel or a housing. Another typical use is in the attaching of elements to body panels of a car throughout the automotive production process, for example on elements of the car in the body-in-white (BIW) shop, on a panel after the paint process, during the assembly line stage, etc.

After the element has been attached to the workpiece, the attractive force between the application tool and the workpiece is removed so that the application tool is released from the workpiece and a new operation cycle can start. In a preferred embodiment, the amount of the attractive force can be adjusted, so that the correct amount of attractive force needed for the specific application can be chosen.

Preferably, the attractive force is a vacuum which is applied between the application tool and the workpiece. The vacuum creates the holding force which is necessary for a secure positioning of the application tool on the workpiece. The vacuum can be applied even on difficult to reach positions and on all airtight materials. However, it is also possible to use other attractive forces, for example magnetic forces.

According to a variant of the method, the element is held in a mounting section of the application tool, the mounting section comprising at least one circumferential compressible seal, and the at least one circumferential compressible seal being compressed by the attractive force. The compression of the compressible seal leads to a stroke movement of the application tool towards the workpiece. Thereby, the element held in the application tool is also moved toward the workpiece so that it comes into contact with the workpiece and can be attached to the workpiece.

A good hold of the element in the application tool and an easy attachment of the element to the workpiece can be achieved if the mounting section of the application tool is formed as a cavity for accommodating the element, the compressible seal surrounds the cavity and the vacuum is applied to the cavity via a vacuum system of the application tool. Thus, the vacuum is directly applied by the application tool. When the element is placed in the application tool, it can protrude out of the cavity of the application tool, can have the same height as the cavity of the application tool or can be completely embedded in the cavity of the application tool.

In still a further variant, the element is attached to the workpiece via an adhesive bonding. This is a very simple way of attaching the element to the workpiece. The adhesive can be applied to the workpiece or to the element.

Furthermore, an adhesive layer may be applied between the element and the workpiece, and the compression of the compressible seal due to the attractive force between the application tool and the workpiece presses the element and the workpiece with the adhesive layer arranged there between against each other, so that the adhesive layer fixes the element to the workpiece. This is a simple way of attaching the element to the workpiece. The adhesive layer can already be present on the element when the element is placed in the application tool. If a pressure sensitive adhesive is used as the adhesive layer, the pressure of the compression of the compressible seal leads to the activation of the self-adhesive layer. When the compressible seal is compressed, it encapsulates a strong region under vacuum in the center of the tool resulting in a strong adhesive build-up due to the self-adhesive layer. By choosing the force of the vacuum applied to the mounting section, the right amount of pressure can be applied.

A gentle and secure method of holding the element in the application tool can be achieved if the element is held in the application tool by a vacuum applied by a second vacuum system of the application tool. In this case, the vacuum system that creates the attractive force between the element and the workpiece is the first vacuum system.

Preferably, the element can be a sheet-like material. Such a sheet-like material can be an NVH material. Examples for NVH materials used in the method are alu-butyl dampers (e.g. Nitto Legetolex); stiffeners (e.g. Nitohard types); materials based on TPE adhesives (e.g. Hexaforce types); aggressive damper materials based on honeycomb materials (e.g. Hexadamp types); bitumen dampers (double coated tapes and magnetic ones), materials to be applied by double coated tapes, double coated tapes, foams with double coated tapes; epoxy, acrylic or rubber epoxy based self-adhesive complexes.

In a further preferred variant of the method, the workpiece is a body panel for a car. Preferably, the workpiece is a car door which has already been assembled. In this case, access to the position on the workpiece where the element should be attached is very difficult. However, the present method using the application tool allows an easy application of the element to the workpiece without causing injuries to the operator. Furthermore, the method allows applying the right amount of pressure to the element and the workpiece for fixing the element to the workpiece during application and permits a repeatable and reliable application of the element to the workpiece.

In still a further variant of the method, a middle section of the mounting section of the application tool is first pulled towards the workpiece during compression of the compressible seal due to the attractive force between the application tool and the workpiece. In this case, the application tool can be deformed to a certain degree so that the middle section of the mounting section is first pulled towards the workpiece. Thereby, the element is first fixed to the workpiece in the middle section. Afterwards the pressure is gradually built up towards the outside of the element. Air bubbles, which might be entrapped between the element and the workpiece, are pushed to the edges of the element and are thereby removed.

Furthermore, the vacuum applied between the application tool and the workpiece can lie in a range from -5000 to -1000000 Pa, preferably in a range from -10000 to -100000 Pa. Tests have shown that a vacuum in this range leads to a good attachment of the elements to the workpiece.

The present invention also refers to an application tool for use in the method as described above.

It is therefore the object of the present invention to provide an alternative application tool which can also be used on difficult-to-reach areas of a workpiece, for example in after-paint applications in the automotive sector where the car structure is already built together and which allows the element to be attached to the workpiece in a reliable way. Of course, the application tool can also be used on other applications, for example in the BIW shop where easy access is usually possible.

In order to achieve this objective, the application tool comprises a mounting section for holding an element to be attached to a workpiece, the mounting section comprising at least one circumferential compressible seal, and a force application system for applying an attractive force between the application tool and the workpiece. The application tool allows an easy fixing of elements on regions of the workpiece which are difficult to reach. The application tool can be easily brought to the position where the element should be attached and can then be positioned and held on to this position by applying an attractive force with the force application system. However, the application tool is not limited to such applications and can also be used as an alternative for existing tools and methods, for example in the body-in-white (BIW) shop, etc.

Preferably, the force application system can be a vacuum system, which is in communication with the mounting section. When the application tool is brought to the right position on the workpiece, the compressible seal contacts the workpiece in an airtight manner. The vacuum system then creates a vacuum in the mounting section so that the application tool is pulled towards the workpiece. This is a simple system which allows the secure positioning and holding of the application tool on the workpiece and which prevents the workpiece from damage.

In a preferred embodiment, the compressible seal can have a height in a range from 0.1 to 100 mm, preferably 5 to 50 mm. The height of the seal may be dependent on the elements to be attached to the workpiece and on the materials of the seal. When the compressible seal is compressed due to the attractive force between the application tool and the workpiece, for example by the vacuum, the application tool performs a stroke-like movement which presses the element against the work piece and thereby leads to the element being fixed to the workpiece.

The material of the compressible seal can be a compressible foam, a flexible polymer, rubber, etc.

In still a further embodiment, the application tool can comprise a second vacuum system for holding the element in the mounting section, the vacuum system for applying the attractive force between the application tool and the workpiece being the first vacuum system, the second vacuum system being in communication with the mounting section. This leads to a gentle and secure hold of the element in the application tool.

Furthermore, the first vacuum system can comprise first channels having first openings which connect the first channels to the mounting section, the second vacuum system can comprise second channels having second openings which connect the second channels to the mounting section and the second openings can be arranged closer to the middle section of the mounting section than the first openings. In this case, the second vacuum system is arranged in a middle section of the application tool and is surrounded by the first vacuum system. Due to this design of the application tool, the double function of the application tool, namely holding the element in the mounting section and positioning the application tool on the workpiece and attaching the element to the workpiece, can be achieved.

In still a further embodiment, the second openings of the second vacuum system can be connected to the suction cups. For holding the element in the mounting section, the suction cups are pressed against the element and the element is sucked and held in the mounting section by the suction cups and the vacuum applied to the suction cups.

It may also be possible that the back of the mounting section is covered by an elastic element which comprises cutouts around the second openings of the second vacuum system. In this embodiment, the cutouts effectively transform the second openings into thin suction cups. The element can then be better held by the vacuum. The elastic element can be a foam or an EPT sealer made of EPDM. This design leads to a reduced tool thickness, as to the tool does not house the suction cups. A thinner tool thickness leads to easier access to more difficult areas.

The size and the weight of the application tool can be reduced if the application tool comprises a frame which is reinforced by a reinforcing structure. The reinforcing structure can for example be a honeycomb like ribbing in the center of the application tool. This allows a reduction of size and weight and nevertheless provides the necessary strength.

In order to allow the application tool to be placed in difficult to reach positions of the workpiece, the application tool can be provided with a handle. Preferably, the handle can be bent.

Furthermore, the shape of the application tool can match the curvature of the workpiece. Especially car parts can have a curved surface. If the shape of the application tool follows this curved surface, a good attachment of the element to the workpiece can be achieved. In one embodiment, only the compressible seal of the application tool can be shaped to follow the curved surface of the workpiece. However, would also be possible that the application tool body, at least in the area of the mounting section, is shaped to follow the curved surface of the workpiece. With an application tool according to this embodiment constant pressure can be applied to the complete surface of the element which is fixed to the workpiece and secure mounting of the element to the workpiece is achieved.

In still another embodiment, the application tool can comprise a guidance system. This guidance system helps to place in the application tool at the correct location when the element is attached to the workpiece in a difficult-to-reach area. For example, the guidance system could be a bar that is placed in a counterpart on the workpiece when the application tool is at the correct location. The guidance system could also be an automated system.

In the following, the invention is described in more detail with the aid of figures, wherein:
Figure 1 shows a perspective view of an application tool from below,
Figures 2a to 2c show a method of attaching an element to a workpiece using the application tool,
Figure 3 shows a bottom view of the application tool of Figure 1,
Figure 4 shows a bottom view of a further embodiment of an application tool,
Figure 5 shows two vacuum systems of the application tool,
Figures 6a to 6d show the attachment of an element to a workpiece,
Figure 7 shows a further embodiment for an application tool, and
Figures 8a to 8d show a method for attaching a further element to a workpiece using the application tool of Figure 7.

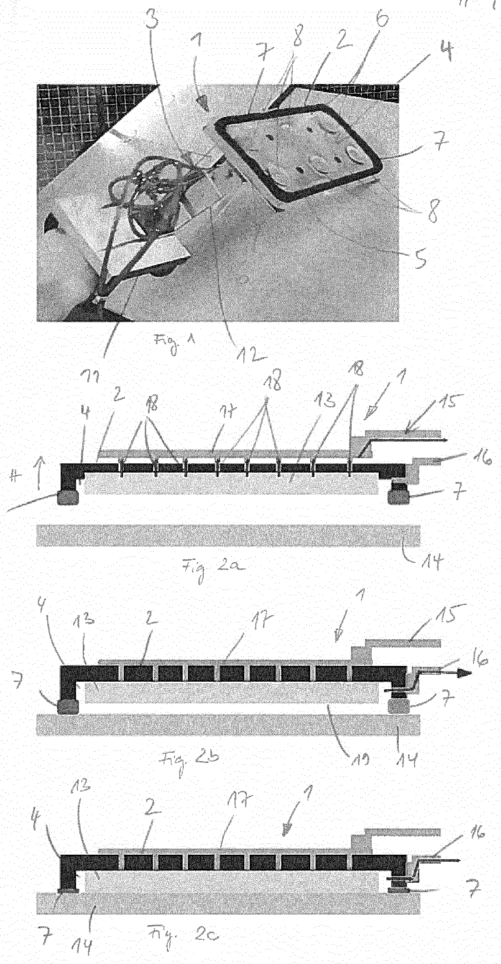

Figure 1 shows a perspective view of the application tool 1 from below. The application tool 1 is used for attaching thin, sheet-like elements onto workpieces. For example, the application tool 1 can be used for mounting NVH materials (Noise, Vibration, Harshness) in the automotive industry. NVH materials usually are self-adhesive materials that are used for dampening or stiffening the body panels of cars, especially outer body panels of car doors.

The application tool 1 comprises an application tool body 2 and a handle 3. The application tool body 2 has a plate-like shape. The application tool body 2 therefore has a very thin height but it extends in its longitudinal direction and in its sidewise direction perpendicular to the longitudinal direction and the height. The application tool body 2 comprises a mounting section 4 for accommodating an element to be mounted. The mounting section 4 comprises a back wall 5 and sidewalls 6 and therefore forms a cavity in the application tool 1. The back wall 5 and at least a part of the sidewalls 6 are formed by the application tool body 2. A circumferential compressible seal 7 is fixed to the application tool body 2 and forms at least a part of the edges of the mounting section 4. The compressible seal 7 completely surrounds the mounting section 4 and forms at least a part of the sidewalls 6 of the mounting section 4. The compressible seal 7 forms the parts of the sidewall 6 that are facing the outside. The sidewalls 6 can be completely formed by the compressible seal 7.

Suction cups 8 are arranged at the back wall 5 of the mounting section 4. The suction cups 8 are connected to a second vacuum system (not shown in Figure 1). The suction cups 8 serve to hold an element in the mounting section.

The handle 3 is fixed to the backside 9 of the application tool body 2. The handle 3 comprises a holding section 11 where an operator can hold the application tool 1 and an arm 12 that connects the application tool body 2 to the holding section 11. The arm 12 is bent so that the application tool body 2 and the holding section 11 are offset from each other in the height direction H (see Fig. 2) of the application tool 1. This allows the operator to place the application tool 1 in places which are difficult to reach, for example car doors of the closed type. As can be seen from Figure 1, the application tool body 2 has a very small height and can therefore be placed in locations which are difficult to reach. However, the application tool 1 can also be used as an alternative to the tools known from the state of the art.

Figures 2a to 2c show a method for attaching an element 13 to a workpiece 14 using the application tool 1. As can be seen in Figure 2a, application tool 1 comprises a first vacuum system 16 and a second vacuum system 15. The second vacuum system 15 comprises second channels 17. The second channels 17 are connected to second openings 18 which open into the mounting section 4 so that the second vacuum system 15 is in communication with the mounting section 4. The element 13 is embedded in the mounting section 4 of the application tool 1. A vacuum is applied to the mounting section 4 via the second vacuum system 15 and sucks the element 13 against the back wall 5 of the mounting section 4 of the application tool 1 so that the element 13 is held in the mounting section 4. The second openings 18 are then covered in an airtight manner by the element 13. In Figure 2a, element 13 is completely embedded in mounting section 4 of the application tool 1. It would however be possible for the element to protrude from the mounting section of the application tool. This is advantageous if the element should be attached to a cavity in the workpiece. The outside of the element can also be flush with the outside of the mounting section of the application tool, that is with the outside of the compressible seal.

Application tool 1 is then brought into contact with the workpiece 14 (see Figure 2b). The compressible seal 7 is in contact with the workpiece 14. Element 13 is still spaced from the workpiece 14 and is held in mounting section 4 of application tool 1 by the vacuum applied by the second vacuum system 15. The mounting section 4, the compressible seal 7 and the workpiece 14 form an airtight connection. As already described above, application tool 1 comprises a further vacuum system, namely first vacuum system 16. First vacuum system 16 is also in fluid communication with mounting section 4 of application tool 1. When application tool 1 is brought into the correct position on workpiece 14 and the compressible seal 7 is in contact with workpiece 14, a vacuum is applied to mounting section 4 via the first vacuum system 16. The vacuum creates a holding force which positions and holds application tool 1 with the element 13 arranged therein onto the workpiece 14. The holding force is larger than the weight of application tool 1 and the weight of element 13 arranged in application tool 1. Application tool 1 can then be used in overhead applications. Figure 2b shows the positioning step when application tool 1 and with element 13 arranged therein are positioned and held on workpiece 14. The vacuum applied via the first vacuum system 16 lies in a range from -10000 to -100000 Pa.

Figure 2c shows the step of attaching element 13 to workpiece 14. Due to the vacuum applied to the mounting section 4 by the first vacuum system 16, compressible seal 7 is compressed and application tool body 2 with element 13 held in mounting section 4 is pulled towards the workpiece 14. An adhesive is arranged between workpiece 14 and element 13. The adhesive can, for example, be a self-adhesive layer 19 arranged on the element 13. However, it would also be possible to apply an adhesive to element 13 or to workpiece 14. Due to the compression of the compressible seal 7, application tool body 2 performs a stroke-like movement and brings element 13 with the self-adhesive layer 19 arranged thereon into contact with workpiece 14. Element 13 is pressed against workpiece 14 by the stroke-like movement and is fixed to the workpiece 14. After element 13 has been fixed to workpiece 14, the vacuum applied to mounting section 4 by the first vacuum system 16 is cut and compressible seal 7 springs back to its original thickness. Application tool 1 can be removed from the workpiece 14 and a new attaching cycle as described above in combination with Figures 2a to 2c can start.

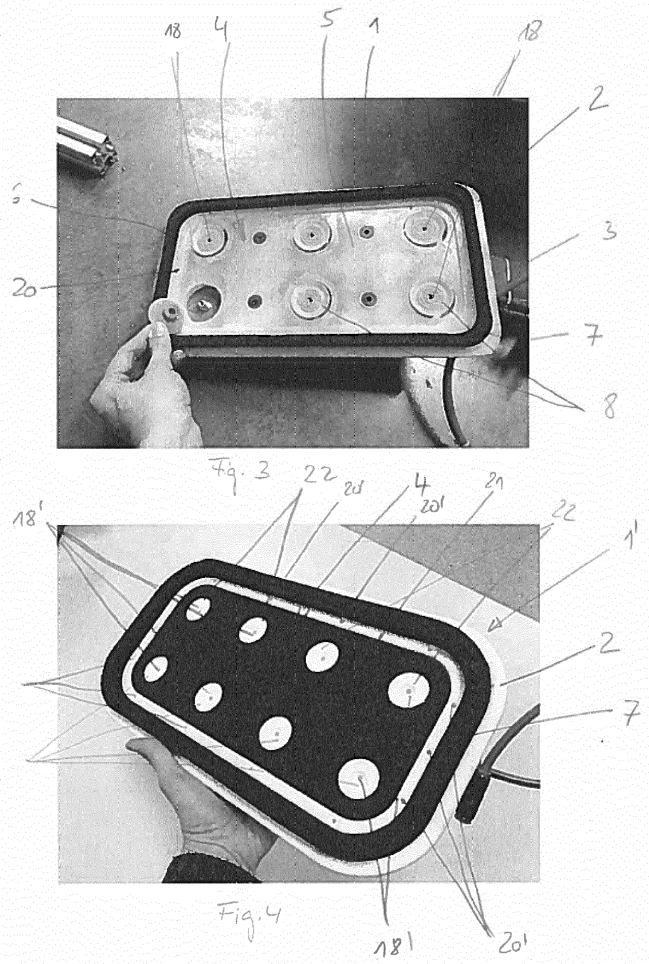

Figure 3 shows a bottom view of application tool 1. Application tool 1 comprises the application tool body 2 and the handle 3 attached to the application tool body 2. The compressible seal 7 is attached to the application tool body 2. The compressible seal 7 is preferably a EPT foam seal, made from EPDM. Application tool body 2 and the compressible seal 7 attached thereto form the mounting section 4. Mounting section 4 has the form of a cavity with one open side, namely the side facing the workpiece when application tool 1 is in use. The back wall 5 of the mounting section 4 is formed by the application tool body 2. Sidewalls 6 of mounting section 4 are preferably formed by the compressible seal 7. However, application tool body 2 can comprise a recess so that sidewalls 6 are partly formed by the application tool body 2 and partly formed by the compressible seal 7. Suction cups 8 are arranged on the back wall 5 of mounting section 4. In the embodiment shown in Figure 3, six suction cups 8 are arranged at the back wall 5 of mounting section 4. Each suction cup 8 is connected to the second vacuum system 15 of application tool 1 via openings 18. Openings 18 are centered in the suction cups 8. In Figure 3, one of the suction cups is removed so that the opening 18 can be clearly seen. Openings 18 form the connection to a second channel 17 of the second vacuum system 15. When an element that should be attached to a workpiece is placed in application tool 1, a vacuum is applied to the element by the second vacuum system 15. Thereby, suction cups 8 suck the element against the back wall 5 of mounting section 4 and hold the element in application tool 1. A first opening 20 of the first vacuum system 16 of application tool 1 is arranged at an outer rim of back wall 4, close to the compressible seal 7. This first opening 20 is connected to a first channel of the first vacuum system 16 so that a vacuum can be applied to the mounting section 4 by the first vacuum system 16.

Figure 4 shows a further embodiment of an application tool 1'. Elements known from the figures described so far are numbered with the same reference numbers as before. Application tool 1' also comprises an application tool body 2. A compressible seal 7 is attached to the application tool body 2. The application tool body 2 and the compressible seal 7 together form the mounting section 4 to accommodate the element to be fixed to a workpiece. Mounting section 4 has the form of a cavity wherein the compressible seal 7 forms at least a part of the sidewalls. An elastic element 21 is arranged at the back wall of mounting section 4. This elastic element 21 can be a thin EPT sealer made from EPDM. Elastic element 21 comprises cutouts 22. The cutouts 22 surround the second openings 18' of the second vacuum system 15. When a vacuum is applied to the cutouts 22 by the second vacuum system 15 via the second openings 18', the cutouts 22 function as suction cups and hold an element arranged in the mounting section 4 of the application tool 1. Due to this design, the height (thickness) of the application tool 1 is very small. In the embodiment shown in Figure 4, eight second openings 18' and therefore also eight cutouts 22 are provided in the back wall of application tool body 2 and the thin elastic element 21 respectively. Elastic element 21 is surrounded by a rim 23. First openings 20' are formed in rim 23. The first openings 20' are connected to the first vacuum system 16. Via the first vacuum system 16 and the first openings 20', a vacuum can be applied to mounting section 4.

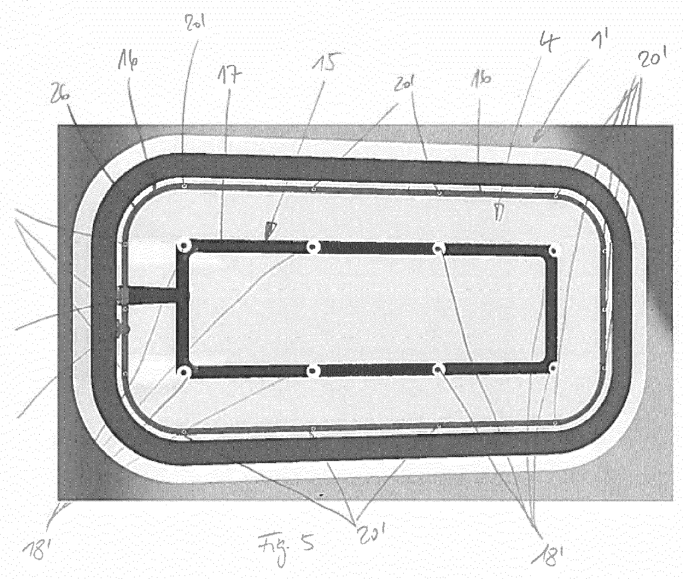

Figure 5 schematically shows the first vacuum system 16 and the second vacuum system 15 of the application tool 1' of Figure 4. However, this arrangement of the vacuum systems is basically the same in the other embodiments of the application tool. The second vacuum system 15 comprises an entry 24 where it is connected to an external vacuum source. The entry 24 leads to the second channel 17 of the second vacuum system 15. The second channel 17 is an annular channel and comprises eight second openings 18'. The second openings 18' connect the second channel 17 and therewith the second vacuum system 15 to mounting section 4 of application tool 1'. The second openings 18' are evenly spaced along the second channel 17. The second channel 17 and the second openings 18' are arranged near the middle of mounting section 4 and therewith form an inner vacuum chamber. This inner vacuum chamber provides suction to hold the element to be mounted to the workpiece.

The first vacuum system 16 also comprises an entry 25 which connects the first vacuum system 16 to an external vacuum source. The entry 25 opens into the first channel 26 of the first vacuum system 16. The first channel 26 of the first vacuum system 16 is also an annular channel and comprises openings 20' which open into the mounting section 4. The openings 20' are evenly spaced along the first channel 26. In Figure 5, fourteen first openings 20' are shown. The first channel 26 surrounds the second channel 16 of the second vacuum system 15. The first channel 26 with the openings 20' therefore forms a peripheral vacuum chamber which pulls the application tool body towards the workpiece when application tool 1' is in use and which ensures excellent surface wetting and therefore strong adhesion of the element to the workpiece.

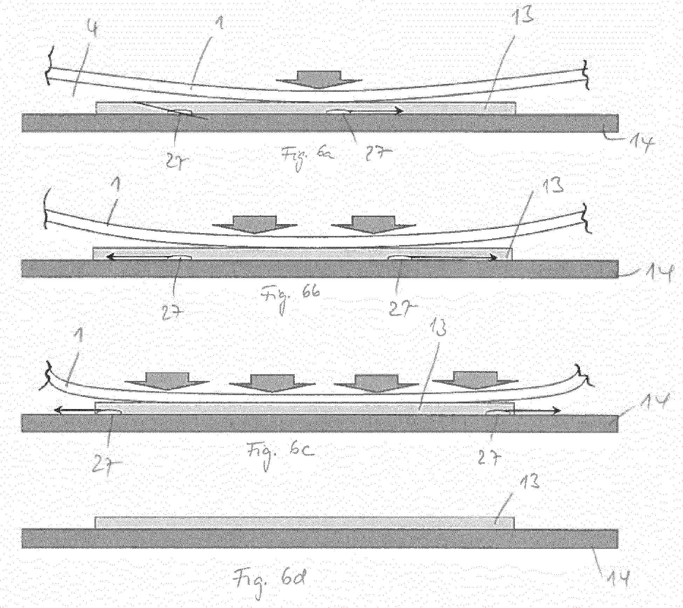

Figures 6a to 6d schematically show attaching of an element 13 to a workpiece 14. Only a part of the back wall of the application tool 1 is shown in the figures. The figures show neither the compressible seal nor the vacuum systems. In Figure 6a, a vacuum is already applied to the mounting section 4. At first, the vacuum pulls a middle section of the back of application tool 1 towards the workpiece. This movement can be encouraged if the application tool 1 comprises an application tool body which is weaker in its middle part. The application tool body then deforms first in its middle when the vacuum is built up in the mounting section of the application tool 1. Thus element 13 is first pressed onto workpiece 14 in a middle section. Afterwards, the pressure, which is applied to the element 13 by the vacuum in the mounting section, is gradually built up towards the outside of the element 13. Air bubbles 27, which might be entrapped between element 13 and workpiece 14, are thereby rolled out to the edges of the element 13 and are removed from between the element 13 and the workpiece 14 (see Figures 6b and 6c). Therefore, the new application tool 1 prevents air entrapment when attaching an element 13 to a workpiece 14.

Application tool 1, 1' as described above can be used in an assisted manual process as a hand application tool or in an automated application on a robot.

The application tool can be produced with 3-D printing.

To minimize the body size and the weight of the application tool, the application tool body can have a hollowed-out center with a hexagonal ribbing structure (honeycomb).

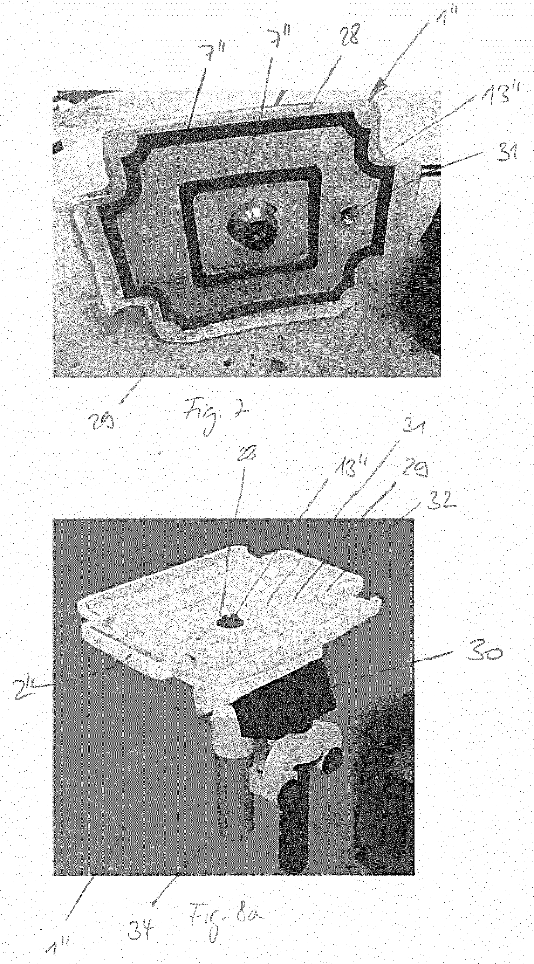

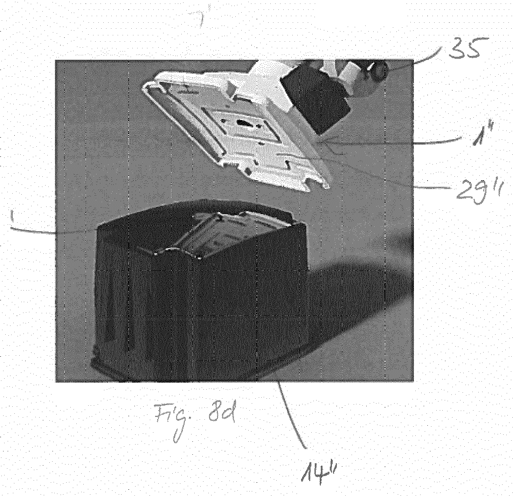

Figures 7 and 8a to 8d show a further embodiment of an application tool 1" and a method for attaching an element 13" to a workpiece 14" using the application tool 1". Element 13" is a plug which should be fixed to a housing, the workpiece 14". Element 13" comprises clips which are clipped into an undercut of an opening of the workpiece 14" (the housing), when the element 13" is attached to the workpiece 14". In the mounting processes used up to now, elements 13" are often damaged which could lead to leakage. Application tool 1" is offered with a control cabinet (not shown) which allows controlling of the application tool.

Figure 7 shows the application tool 1" holding the element 13" from below. Application tool 1" comprises an application tool body 2" with a mounting section 28. Mounting section 28 of this embodiment only serves to hold element 13" to be fixed to workpiece 14". Mounting section 28 is arranged in a middle section of application tool body 2".

Two compressible seals 7" are fixed to the bottom of application tool body 2". One of the compressible seals 7" is fixed to the edges of the application tool body 2", the other compressible seal 7" is fixed around mounting section 28. The two compressible seals 7" form a vacuum chamber 29 between each other. Vacuum chamber 29 is connected to a vacuum system 30 via an opening 31. The two compressible seals are preferably EPT sealers made from EPDM.

In the following, a method for fixing the element 13" to the workpiece 14' 'using the application tool 1" is described with the aid of Figures 8a to 8d. As a first step, shown in figure 8a, element 13" is placed in mounting section 28 and thereby is held in application tool 1". The compressible seals are not shown in figure 8a. Application tool body 2" of application tool 1" comprises a first groove 32 arranged near the edges of the application tool body 2". The outer compressible seal 7" is placed in and fixed to this first groove 32. Application tool body 2" further comprises a second groove 33 into which the inner compressible seal is fixed. As already described above, vacuum system 30 is in fluid communication with the vacuum chamber 29 via opening 31. Furthermore, application tool 1" comprises an attaching system 34 for attaching element 13" to the workpiece 14". Mounting section 28 only holds the element.

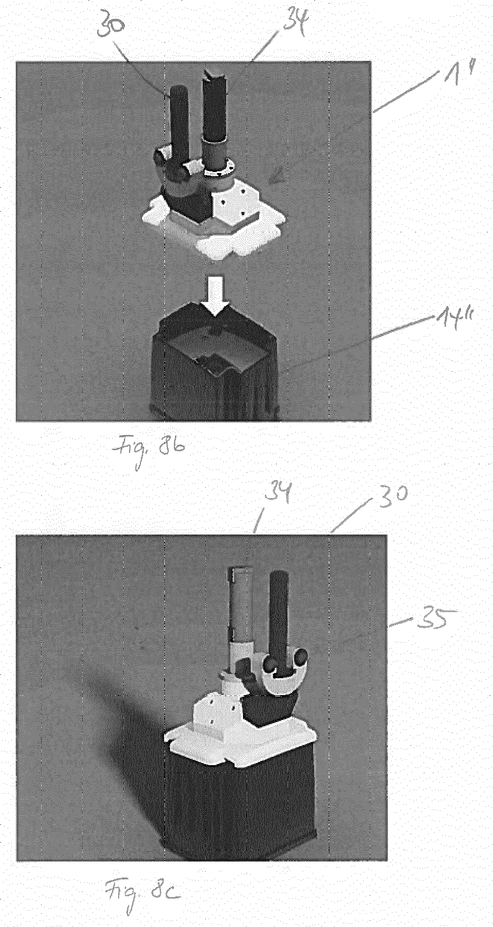

When element 13" is placed and held in application tool 1", application tool 1" is placed on workpiece 14" (see Figure 8b). In the embodiment shown, workpiece 14" is a housing. When application tool 1" is placed on the workpiece 14", a vacuum is applied to vacuum chamber 29 by vacuum system 30. As the vacuum is created in vacuum chamber 29, application tool 1" fastens itself to workpiece 14" and is held on workpiece 14" by the vacuum. Thereby, the element 13" is automatically brought into the correct position for fixing it to workpiece 14".

When the vacuum is in place in vacuum chamber 29, the element 13" is automatically applied by attaching system 34 (see Figure 8c). Attaching system 34 is preferably an integrated pneumatic piston. In this case, the element 13" is fired into the opening in workpiece 14" by the pneumatic piston. A click noise signals that element 13" has been applied to workpiece 14".

Once element 13" has been fixed to workpiece 14", the vacuum in vacuum chamber 29 is released, for example by pressing a button 35 on vacuum system 30. The two compressible seals 7" spring back to their original thickness and application tool 1" is released from workpiece 14" with element 13" attached thereto. Then, a new attaching cycle can start.

### List of reference signs

- 1; 1'; 1": application tool
- 2; 2": application tool body
- 3: handle
- 4: mounting section
- 5: back wall mounting section
- 6: sidewall mounting section
- 7; 7": compressible seal
- 8: suction cup
- 9: backside application tool
- 11: holding section
- 12: arm
- 13; 13": element
- 14; 14": workpiece
- 15: second vacuum system
- 16: first vacuum system
- 17: second channel
- 18; 18': second opening
- 19: self-adhesive layer
- 20; 20': first opening
- 21: elastic element
- 22: cutout
- 23: rim of mounting section
- 24: entry second vacuum system
- 25: entry first vacuum system
- 26: first channel
- 27: air bubble
- 28: mounting section
- 29: vacuum chamber
- 30: vacuum system
- 31: opening
- 32: first groove
- 33: second groove
- 34: attaching system

- H: height of the application tool

## Claims

1. Method for attaching an element (13; 13") to a workpiece (14; 14") using an application tool (1; 1'; 1"), the method comprising the following steps:
- holding the element (13; 13") with the application tool (1; 1'; 1"),
- placing the application tool (1; 1'; 1") with the element (13; 13") held therein onto the workpiece (14; 14"),
- creating an attractive force between the application tool (1; 1'; 1") holding the element (13; 13") and the workpiece (14; 14") and thereby positioning the application tool (1; 1'; 1") holding the element (13; 13") on the workpiece (14; 14"), and
- attaching the element (13; 13") to the workpiece (14; 14").

2. Method according to claim 1, **characterized in that** the attractive force is a vacuum, which is applied between the application tool (1; 1'; 1") and the workpiece (14; 14").

3. Method according to claim 1 or 2, **characterized in that** the element (13; 13") is held in a mounting section (4; 28) of the application tool (1; 1'; 1"), the mounting section (4; 28) comprising at least one circumferential compressible seal (7; 7"), the at least one circumferential compressible seal (7; 7") being compressed by the attractive force.

4. Method according to claim 3, **characterized in that** the mounting section (4) and the circumferential compressible seal (7) form a cavity and the vacuum is applied to the cavity via a vacuum system (16) of the application tool (1;1').

5. Method according to at least one of claims 1 to 4, **characterized in that** the element (13) is attached to the workpiece (14) via adhesive bonding.

6. Method according to claim 5, **characterized in that** an adhesive layer (19) is applied between the element (13) and the workpiece (14), and that the compression of the compressible seal (7) due to the attractive force between the application tool (1; 1') and the workpiece (14) presses the element (13) and the workpiece (14) with the adhesive layer (19) arranged there between against each other so that the adhesive layer (19) fixes the element (13) to the workpiece (14).

7. Method according to at least one of claims 1 to 6, **characterized in that** the element (13) is held in the application tool (1; 1') by a vacuum applied by a second vacuum system (15) of the application tool (1; 1").

8. Method according to at least one of claims 1 to 7, **characterized in that** the element (13) is a sheet-like material.

9. Method according to at least one of claims 3 to 8, **characterized in that** first a middle section of the mounting section (4) of the application tool (1; 1') is pulled towards the workpiece (14) during the compression of the compressible seal (7) due to the attractive force between the application tool (1; 1') and the workpiece (14).

10. Method according to at least one of claims 2 to 9, **characterized in that** the vacuum applied between the application tool (1; 1') and the workpiece (14) lies in a range from -5000 to - 1000000 Pa, preferably -10000 to -100000 Pa.

11. Application tool (1; 1'; 1") for use in the method according to at least one of claims 1 to 10 comprising a mounting section (4; 28) for holding an element (13; 13") to be attached to a workpiece (14; 14"), the mounting section (4; 28) comprising at least one circumferential compressible seal (7; 7"), and a force application system for applying an attractive force between the application tool (1; 1'; 1") and the workpiece (14; 14").

12. Application tool (1; 1'; 1") according to claim 11, **characterized in that** the force application system is a vacuum system (16; 30) which is in communication with the mounting section (4; 28).

13. Application tool (1; 1'; 1") according to claims 11 or 12, **characterized in that** the compressible seal (7; 7") has a height in a range from 0.1 to 100 mm, preferably 5 to 50 mm.

14. Application tool (1; 1') according to claims 12 or 13, further comprising a second vacuum system (15) for holding the element (13) in the mounting section (4), the vacuum system for applying the attractive force between the element and the workpiece being the first vacuum system (16), the second vacuum system (15) being in communication with the mounting section (4).

15. Application tool (1; 1') according to claim 14, **characterized in that** the first vacuum system (16) comprises first channels (26) having first openings (20; 20') which connect the first channels (26) to the mounting section (4), the second vacuum system (15) comprises second channels (17) having a second openings (18; 18') which connect the second channels (17) to the mounting section (4), the second openings (18; 18') being arranged closer to a middle section of the mounting section (4) than the first openings (20; 20').

16. Application tool (1) according to claim 15 **characterized in that** the second openings (18) of the second vacuum system (15) are connected to suction cups (8).

17. Application tool (1') according to claim 15, **characterized in that** a back of the mounting section (4) is covered by an elastic element (21), the elastic element (21) comprising cutouts (22) around the second openings (18') of the second vacuum system (15).

18. Application tool (1; 1') according to at least one of claims 11 to 17, comprising a frame, which is reinforced by a reinforcing structure.

19. Application tool according to at least one of claims 11 to 18, **characterized in that** the shape of the application tool matches a curvature of the workpiece.

20. Application tool according to at least one of claims 11 to 19, further comprising a guidance system.
